# EUROPEAN PATENT APPLICATION

(11) **EP 1 424 313 A1**
(43) Date of publication of application: **02.06.2004**
(21) Application number: 02806713.0
(22) Date of filing: 12.08.2002
(51) Int. Cl.: C03B 1/00, C03B 5/00

(54) **METHOD OF PRODUCING FRITS, CORRESPONDING INSTALLATION AND FRITS THUS OBTAINED**

(30) Priority: 16.08.2001 ES 200101907
(71) Applicant: Esmalglass, S.A., 12540 Villarreal (Castellon) (ES)
(72) Inventor: SANZ PESUDO, Manuel, E-12540 Villarreal (ES)
(74) Representative: Ungria Lopez, Javier
(86) International application number: PCT/ES2002/000401
(87) International publication number: WO 2003/078336

(57) **Abstract**

The process comprises: (a) formation of a slip in a stirring tank with all the raw materials constituting the frit; (b) storing that slip in a feed tank; (c) introducing that slip into a atomizer for converting it into a dry atomized powder; and (d) introducing the dry atomized powder into a fusion oven in order to produce a fused material which, when subjected to sudden cooling, produces a solidified material corresponding to the desired frit.

The installation represented in the figure includes: (1) Silos; (2) Stirring tank; (3) Feed tank; (4) Atomizer; (5) Oven; (6) Extractor; (7) Frit; (8) Water; (9) Cyclone; (10) Hopper; (11) Scales.

Application in the ceramic industry sector.

## Description

### TECHNICAL FIELD OF THE INVENTION

The present invention falls within the sector of the ceramic industry, and particularly in that of the production of frits and ceramic enamels.

More specifically, the present invention provides a new process for the manufacture of frits, which presents major advantages over those currently used.

### STATE OF THE ART PRIOR TO THE INVENTION

Within the sector of the ceramic industry there exists a multitude of patents related to the manufacture of frits, enamels, porcelains and other components of ceramic articles.

Nevertheless, with a view to the particular process of the present invention, worthy of special mention is the document EP 098484 A1 relating to, among other objects, another method for the manufacture of ceramic frits though with a lot of drawbacks and therefore at a clear disadvantage to that proposed here.

Essentially, in accordance with the teachings and knowledge of the prior art for the manufacture of a frit, commercial raw materials are usually used, which the suppliers provide according to specifications and which are stored in silos. Each frit has a formula consisting of a mixture of these raw materials. In order to complete a mixture the quantities shown in the corresponding composition are dosed from the silos, and they are then sent to a mixer where a homogenous mixing is carried out of all the components. After that, this mixture is stored in the feed hopper from where the fusion chamber is continually fed by means of an appropriate system. The solid materials accumulated at the entrance to that chamber pass to the liquid state (fusion process) due to the effect of the temperature reached inside, thanks to the calorific input of various combustion burners of gas, air and oxygen. The gases coming from the combustion are expelled via a chimney and, owing to the inevitable dragging of solid materials, have to be filtered later on. The resulting incandescent liquid (fused raw material) is suddenly cooled, either by letting it fall onto a recipient with water or by using other systems permitting such cooling (fritting process). As a result of this process, a solid product is obtained known as frit, which is then dried and packed.

The following diagram (I) illustrates the conventional process for frit production described above, which is the one currently being used:

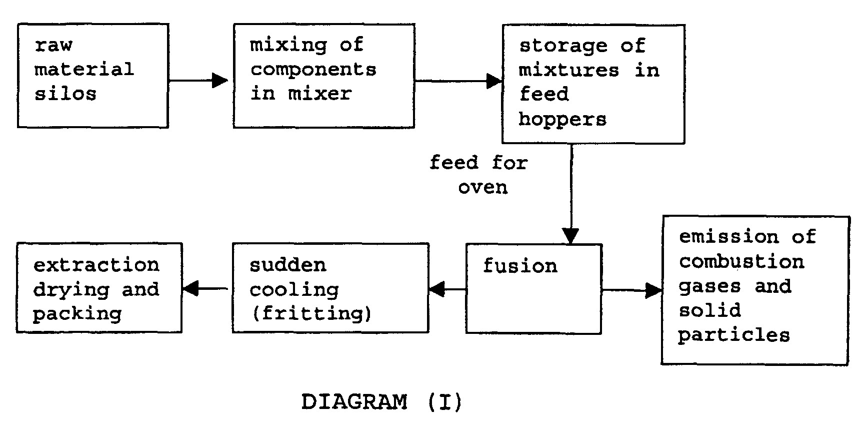

These conventional methods nevertheless present a series of drawbacks and disadvantages which it has so far not been possible to overcome.

So, as has been described above, in conventional methods for the fusion of ceramic frits, raw materials are used in the form of a fine powder, which are mixed together by mechanical means. These solid materials accumulate at the entrance to the fusion chamber where they present a certain resistance to the change of physical state (solid-liquid) owing to the different components not being intimately mixed together and to the lack of exchange surface offered by them for penetration of the heat, all of which delays the formation of the vitreous structure constituting the frit.

Furthermore, those materials are susceptible to being dragged along by the combustion gases of the oven, which as a direct consequence entails a high index of emission of solid particles in the chimney of same.

Also, in the event of using a closed water circuit for the sudden cooling of the frit, the water used in the cooling finds its concentration of solid particles increasing so that a series of purges needs to be performed on the circuit. Nevertheless, this gives rise to the problem of having to handle water with a high content of solid particles of frit and a high concentration of boron in solution coming from the usual raw materials.

The drawbacks stated above lead to a loss of raw materials with the consequent loss of yield in the end product. It also leads to contamination of the gases emitted in the process and of the waste water coming from it, with the consequent environmental problems. This makes it necessary to have additional stages for purifying those gases and water in order to be able to discharge them without causing environmental contamination, which is subject to ever tighter legal controls.

So there exists a need for new manufacturing processes for frits that will overcome these drawbacks, enabling a greater exploitation of the raw materials, a greater yield of end product, a reduction of environmental impact and, if possible, a saving of raw materials and energy.

The present applicant has researched deeply into this field and managed to obtain a series of substantial modifications to conventional processes for the manufacture of frits, which constitute the basis of a new frit manufacturing process that overcomes the drawbacks mentioned earlier. This process is precisely the object of the present invention which is discussed in full detail in the following sections of this descriptive specification.

### DETAILED DESCRIPTION OF THE INVENTION

As stated in the heading, the present invention refers to a new process for manufacture of frits, to the corresponding installation and to the frits thus obtained.

Said process is characterised in that it essentially consists of the following stages:
1. - Dosing (formulation)
   The weighing of the different raw materials making up the formula is carried out.
2.-Mixing in aqueous medium
   Introduction of the raw materials making up the formula into a stirring tank for their dispersion and formation of a suspension in water (slip)
3. - Storage
   Storage of this slip in a feed tank.
4. - Atomizing
   Introduction of the suspension into an atomizer in order to obtain the raw material of the formula stored in the form of a atomized powder. For the atomizing, the gases extracted from the fusion oven are used. These gases are filtered via damp cyclones taking advantage of the water from the cooling circuit for the frit.
5. Fusion
   The dry atomized material, obtained from the atomizing stage, is introduced into the fusion oven for producing the desired ceramic frit.
   The process of the present invention, described by the above stages, is illustrated in the following Diagram (II) 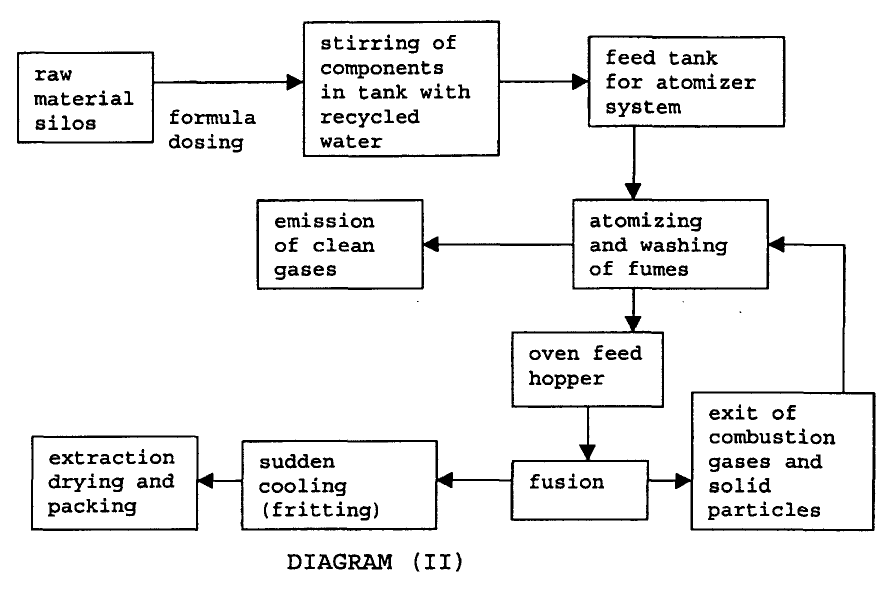
in which the differences introduced with respect to the conventional process illustrated by Diagram (I) can be clearly seen, and which permit the main objectives of the present invention to be obtained, which are summarised below
* Increase in the yield expressed in kilos per hour of frit produced in an oven.
* Energy saving expressed in "kcal/kilogram of frit produced".
* Purification of the oven fumes by means of damp capture of the solid particles present in it.
* Purging of the cooling water closed circuit for the frit.

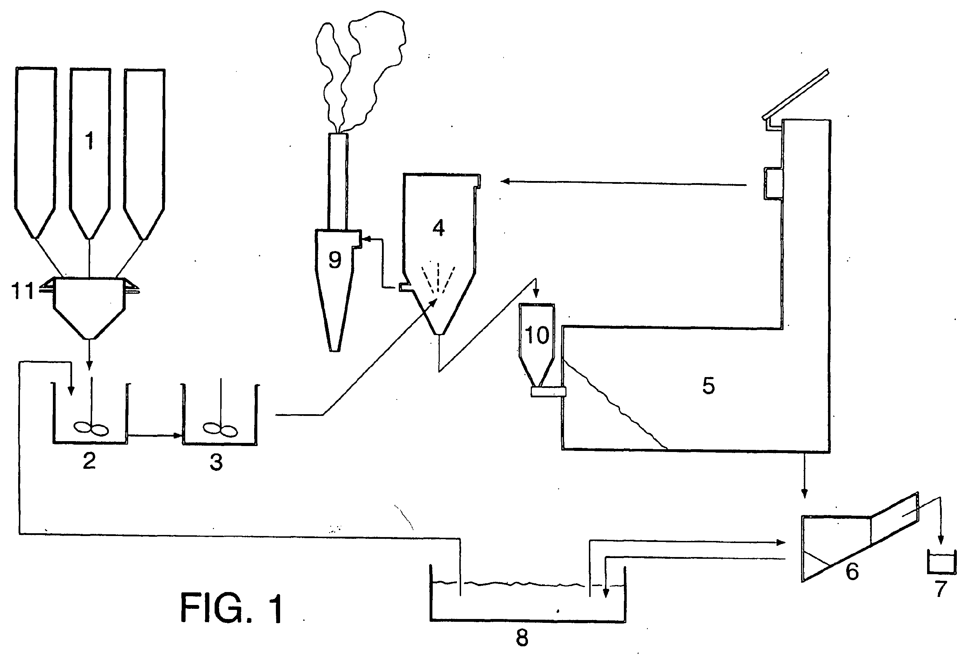

A more detailed description is now going to be made of each of the stages of the process stated above, making reference to the sole Figure 1 which is attached for a better understanding of it. This Figure 1 represents a schematic diagram of the installation used for carrying out the process of the present invention. In that diagram can be seen silos 1 where the raw materials are stored constituting the formulation of the frit, from which those raw materials are dosed into the scales 11 in order to complete the formula and they are then discharged into a damp stirring tank 2 (the water for which comes from the closed cooking circuit for the oven 5). In that tank the raw materials are dispersed in the water in order to form a slip which is sent to a feed tank-3 of a drying system by atomizing. This slip is injected from that tank 3 to the atomizer 4 in which the water is evaporated obtaining a dry atomized product. This product is made to pass to the oven 5 where it undergoes a fusion process, with the fused material being made to pass to the extractor 6, wherein it is subjected to a sudden cooling, in order to isolate the frit 7.

In accordance with that stated above, the process of the present invention commences with the dosing of the raw materials making up the formula of a certain frit, using systems for dispatching and weighing of previously determined quantities in scales. But unlike the conventional system, the sending of this set of materials from the silos 1 is done to a damp stirring tank 2, fed by previously established quantities of water 8 (coming from the closed cooling circuit for the oven). By means of controlled stirring, the dispersion of the different materials is achieved and a slip is obtained (suspension of solids of the mixture in water), which is sent via a pneumatic pump to a feed tank 3 for the drying-atomizing system.

In that system, the slip is injected from that feed tank to the atomizer 4, which uses the combustion gases collected in the chimney of the oven 5 (oven fumes). The atomizer 4 is equipped with its own combustion unit in case the hot air needs are greater than those the oven can offer. The effect of the temperature of these gases causes the water present in the slip to evaporate and a dry atomized product is obtained.

By means of a system of cyclones 9 the solid particles are separated from the gases of the atomizer and clean gases and steam are emitted into the atmosphere.

The dry granulated solid obtained is sent to the feed hopper for the oven 10, from where it goes to the feed for the fusion chamber of it. This powdered material is introduced into the oven where it undergoes a fusion process, with the frit being obtained from the extractor 6, wherein the fused material from the fusion chamber of the oven is gathered and duly treated.

It is important to highlight the change of physical state presented by the materials (from solid to liquid) at the entrance to the fusion chamber due to the sharp change of temperature. In this new process, as the feed is done with a raw material (granulated) with more suitable physical characteristics, this facilitates a greater penetration of heat and a greater reaction speed as the components of the formula have been mixed more intimately and, as a consequence, an improvement is obtained in the yield, expressed in kilos per hour produced, of the frit fusion oven, as well as an energy saving in the process.

The objective of purifying the solid materials accompanying the combustion fumes of the oven is also achieved since these are washed in the atomizer cyclone, and the purging of the water cooling circuit is also achieved due to this being used in the preparation of the slip for atomizing.

### BRIEF DESCRIPTION OF THE FIGURE

The sole Figure 1 that is attached is an illustrative schematic diagram of the process of the present invention. In that Figure, the different numerical references have the following meanings:
1.- Raw material silos
2.- Stirring tank
3.- Feed tank
4.- Atomizer
5.- Oven
6.- Extractor
7.- Frit
8.- Water from the oven
9.- Cyclone
10.- Feed hopper for the oven
11.- Scales

### MODES OF EMBODIMENT OF THE INVENTION

The present invention is further illustrated by means of the following Example, which does not intend to be limiting in its scope whatsoever. It will be evident to the common expert in the field that it is possible to make certain changes and modifications to the invention as it has been described, always provided that they do not depart from the spirit and scope of the attached claims.

### EXAMPLE

The process of the invention was carried out starting from the following composition of frit:

| **Component** | **Quantity (% w/w)** |
|---|---|
| Quartz | 39% |
| Potassium feldspar | 23% |
| Calcite | 18% |
| Zinc oxide | 8% |
| Dolomite | 6% |
| Colemanite | 6% |

First, 1000 kg of a mixture of the commercial raw materials was dispersed according to the described percentages in 50% of water (w/w). The resulting slip was atomized in order to obtain a dry product in granular form.

A fusion oven for frits, incorporating a burner of 360,000 kcal/hours, was then fed. The product resulting from the fusion fully conformed with the existing quality specifications.

The specific consumption came to 3,900 kcal/kg of frit, while the consumption for the conventional process in the same oven, for this same frit, amounts 4,400 kcal/kg, the saving obtained being 11.3%. It must be noted that the fact of using the combustion gases for drying the slip in the atomizer does not increase the final specific consumption of the process and, on the contrary, it produces a notable improvement in the emissions in terms of temperature of gases and their cleanness.

The production yield obtained in the conventional process stood at 160 kg off frit per hour, whereas the maximum obtained by the conventional process was 120 kg per hour, the increase in yield therefore being 33.3%.

## Claims

1. Process for the manufacture of frits, **characterised in that** it essentially comprises the following operations:
a) introduction of the raw materials constituting the frit, previously weighed and dosed, into a damp stirring tank for their dispersion and formation of a suspension in water, or slip;
b) storage of the slip coming from stage (a) in a feed tank;
c) introduction of that slip from that tank to a atomizer for being converted into a dry atomized powder, this atomizing being carried out using gases extracted from a fusion oven and purified by means of damp cyclones; and
d) introduction of the dry atomized powder coming from stage (c) into said fusion oven for producing a fused material that is subjected to sudden cooling for its fast solidification, said solidified material constituting the desired frit.

2. Process according to claim 1, **characterised in that** said damp stirring tank is fed with previously established quantities of water coming from the closed water cooling circuit for the oven.

3. Process according to claim 1, **characterised in that** said slip formed in said damp stirring tank is sent, by means of a pneumatic pump, to said feed tank where it is stored.

4. Process according to claim 1, **characterised in that** said slip stored in said tank is injected therefrom to said atomizer, which is also equipped with its own combustion unit in case a greater quantity of hot air is needed than can be supplied by said gases from said oven.

5. Process according to claim 1, **characterised in that** in said atomizer, due to the temperature effect, the water of the slip is evaporated and a dry atomized product is obtained.

6. Process according to claim 1, **characterised in that** said gases coming from the oven and arriving at the atomizer are previously treated with a system of cyclones which separate the solid particles from them, with which the emissions into the atmosphere consist of clean gases and steam.

7. Installation for carrying out the process of the preceding claims 1 to 6, **characterised in that** it essentially comprises the following elements:
- storage silos 1 for the raw materials constituting the formulation of the frit to obtain;
- damp stirring tank 2 for the formation of the corresponding slip;
- feed tank 3 for the storage of that slip;
- atomizer 4 for the conversion of that slip into a dry atomized material;
- oven 5 for the fusion of that dry atomized material;
- extractor 6 for the sudden cooling of the fused mass and the obtaining of the desired frit 7,
- a cyclone 9,
- a feed hopper for the oven 10,
- scales 11,
the gases coming from that oven recirculating **in that** installation, after being previously purified by a system of damp cyclones in order to eliminate solid particles and likewise recirculating the steam coming from the oven, via the corresponding cooling circuit in order to use it in the preparation of said slip.
